# EUROPÄISCHE PATENTSCHRIFT

(11) **EP 3 411 912 B1**
(45) Veröffentlichungstag und Bekanntmachung des Hinweises auf die Patenterteilung: **22.04.2020**
(21) Anmeldenummer: 17700052.8
(22) Anmeldetag: 04.01.2017
(51) Int. Cl.: H01M 2/10, H01M 10/04, H01M 10/0525

(54) **BATTERIEMODUL MIT EINER MEHRZAHL AN BATTERIEZELLEN, VERFAHREN ZU DESSEN HERSTELLUNG UND BATTERIE**
BATTERY MODULE HAVING A PLURALITY OF BATTERY CELLS, METHOD FOR PRODUCTION THEREOF, AND BATTERY
MODULE DE BATTERIE POURVU D'UNE PLURALITÉ D'ÉLÉMENTS DE BATTERIE, PROCÉDÉ DE FABRICATION ET BATTERIE

(30) Priorität: 03.02.2016 DE 102016201605
(43) Veröffentlichungstag der Anmeldung: 12.12.2018
(73) Patentinhaber: Robert Bosch GmbH, 70442 Stuttgart (DE)
(72) Erfinder: RIEDMANN, Matthias, 70188 Stuttgart (DE); KOHN, Peter, 70178 Stuttgart (DE); HAFENBRAK, Robert, 70469 Stuttgart (DE); GREINER, Daniel Bernd, 72070 Tuebingen (DE); WAGNER, Christian, 70469 Stuttgart (DE)
(86) Internationale Anmeldenummer: PCT/EP2017/050119
(87) Internationale Veröffentlichungsnummer: WO 2017/133856

(56) Entgegenhaltungen:
- EP-A1- 2 453 146
- WO-A1-2015/141631
- JP-A- 2007 165 698
- JP-A- 2014 192 094

## Beschreibung

### Stand der Technik

Die Erfindung geht aus von einem Batteriemodul mit einer Mehrzahl an Batteriezellen und einem Verfahren zu dessen Herstellung nach Gattung der unabhängigen Ansprüche. Gegenstand der vorliegenden Erfindung ist auch eine Batterie mit einem solchen Batteriemodul.

Aus dem Stand der Technik ist bekannt, dass Batterien, wie insbesondere Lithium-Ionen-Batterien, wenigstens aus einem Batteriemodul oder vorteilhaft auch aus einer Mehrzahl an Batteriemodulen bestehen. Weiterhin weist ein Batteriemodul zudem bevorzugt eine Vielzahl an einzelnen Batteriezellen auf, welche untereinander zu dem Batteriemodul verschaltet sind. Dabei können die einzelnen Batteriezellen seriell oder parallel miteinander verschaltet sein.

Alterungsprozesse aufgrund von Lade- und Entladevorgängen in den einzelnen Batteriezellen bedingen interne Kräfte, welche dazu führen, dass die einzelnen Batteriezellen während der Betriebsdauer nicht formkonstant bleiben, sondern diese als Schwellung bezeichneten Prozesse deformieren das Gehäuse der Batteriezellen. Diese Prozesse erfordern somit eine Ausbildung des Batteriemoduls, welche die aufgrund von Alterungsprozessen entstehenden internen Kräfte aufnehmen kann und die Verformung der Gehäuse der einzelnen Batteriezellen begrenzen kann. Die Beaufschlagung der einzelnen Batteriezellen oder deren Gehäuse mit einer Kraft, um die Verformung zu begrenzen, wird allgemein als Verpressung bezeichnet. Die Alterungsgeschwindigkeit der einzelnen Batteriezellen wird insbesondere durch die zu deren Verpressung aufgewandte Kraft bestimmt, wobei die Alterungsgeschwindigkeit in dem technisch relevanten Betriebsbereich mit steigender Verpresskraft zunimmt.

Des Weiteren erwärmen sich die einzelnen Batteriezellen während des Betriebes aufgrund ihres Innenwiderstandes bei einem elektrischen Stromfluss. Dabei weisen die Batteriezellen eines Batteriemoduls eine inhomogene Temperaturverteilung auf, wobei Batteriezellen in der Mitte eines Batteriemoduls eine höhere Temperatur aufweisen aufgrund der im Vergleich zu sich am Rand eines Batteriemoduls befindlichen Batteriezellen schlechteren Möglichkeit der Wärmeabführung. Die Alterungsgeschwindigkeit der einzelnen Batteriezellen wird insbesondere auch durch deren Temperatur bestimmt, wobei die Alterungsgeschwindigkeit mit steigender Temperatur zunimmt. Da Batteriezellen mit zunehmender Temperatur schneller altern, weist ein Batteriemodul mit einer inhomogenen Temperaturverteilung auch eine inhomogene Verteilung der Alterungsgeschwindigkeit auf, welche dazu führen kann, dass die Lebensdauer des gesamten Batteriemoduls verringert wird, denn die Lebensdauer eines Batteriemoduls wird durch die am schnellsten alternde Batteriezelle bestimmt.

Aus dem Stand der Technik ist es insbesondere aus der US 2014/0023893 bekannt, dass Batteriezellen zwischen zwei Trennwänden angeordnet sind, wobei die einzelnen Trennwände elastische Elemente zur Bestimmung der Elastizität einer einzelnen Trennwand aufweisen.

Weiterhin ist es aus den JP 2008/124033, WO 2015/141631 und EP 2453146 bekannt, elastische Elemente zwischen zwei Batteriezellen anzuordnen.

### Offenbarung der Erfindung

Das Batteriemodul mit einer Mehrzahl an Batteriezellen und das Verfahren zu dessen Herstellung haben den Vorteil, dass eine Kraft, mit der eine einzelne Batteriezelle verpresst wird, über eine Verformungskonstante eines Federelements einstellbar ist. Insbesondere kann somit für jede einzelne Batteriezelle des Batteriemoduls eine gewünschte Verpresskraft eingestellt werden. Dadurch ist es möglich, die Alterungsgeschwindigkeit einzelner Batteriezellen über die zu deren Verpressung aufgewandte Kraft zu beeinflussen.

Erfindungsgemäß wird ein Batteriemodul mit einer Mehrzahl an Batteriezellen zur Verfügung gestellt, wobei die Batteriezellen insbesondere Lithium-Ionen-Batteriezellen sind. Das Batteriemodul weist eine Mehrzahl an Trennwänden auf, wobei zwischen zwei Trennwänden eine Batteriezelle angeordnet ist. Dabei ist zwischen den zwei zu der Batteriezelle benachbarten Trennwänden weiterhin ein Federelement angeordnet. Insbesondere ist das Federelement als Zug- und/oder Druckfederelement ausgebildet. Das Federelement ist in der Art kontaktierend und/oder verbunden mit den zwei Trennwänden angeordnet, dass ein Wert einer Verformungskonstanten des Federelements eine von den zwei Trennwänden auf die Batteriezelle übertragene Kraft bestimmt.

Durch die in den abhängigen Ansprüchen aufgeführten Maßnahmen sind vorteilhafte Weiterbildungen und Verbesserungen der im unabhängigen Anspruch angegebenen Vorrichtung oder des im unabhängigen Anspruch angegeben Verfahrens möglich.

Zwei Trennwände zwischen denen eine Batteriezelle angeordnet ist, sind durch einen Abstand voneinander beabstandet angeordnet. Dabei erhöht sich die Verpresskraft, mit der die zwischen den zwei Trennwänden angeordnete Batteriezelle durch die zwei Trennwände verpresst wird, insbesondere mit zunehmender Verkleinerung dieses Abstandes. Das Federelement ist dabei kontaktierend und/oder verbunden mit den zwei Trennwänden und zwischen diesen angeordnet, wobei für eine Verringerung des Abstandes der zwei Trennwände auch eine von der Verformungskonstanten abhängige Kraft zu einer Verformung des Federelements erforderlich ist. Mit anderen Worten ausgedrückt bedeutet dies, dass zu einer Verpressung der zwischen den zwei Trennwänden angeordneten Batteriezelle auf die zwei Trennwände jeweils eine in Richtung der Batteriezelle zeigende Kraft aufgebracht wird, welche zu einer Verkleinerung des Abstandes der zwei Trennwände dient. Dabei wirken den zur Verpressung aufgebrachten Kräften sowohl die auf einer Ausdehnung der Batteriezelle beruhenden Kräfte als auch eine Rückstellkraft des Federelements entgegen. Da die Rückstellkraft des Federelements von dessen Verformungskonstanten abhängig ist, kann durch eine Erhöhung des Wertes der Verformungskonstanten die Rückstellkraft erhöht werden, wodurch sich bei gleichbleibender auf die zwei Trennwände aufgebrachter Kraft der Abstand zwischen den zwei Trennwänden vergrößert und dadurch die Verpresskraft reduziert wird. Dadurch ist somit insbesondere bei konstanten auf die zwei Trennwände aufgebrachten Kräften nur mittels des Wertes der Verformungskonstanten der Abstand der zwei Trennwände bestimmbar und dadurch auch die letztlich auf die Batteriezelle einwirkende Verpresskraft.

Von Vorteil ist es, wenn zwischen zwei zu einer ersten Batteriezelle benachbarten Trennwänden ein erstes Federelement angeordnet ist und wenn zwischen zwei zu einer zweiten Batteriezelle benachbarten Trennwänden ein zweites Federelement angeordnet ist. Dabei weisen das erste Federelement und das zweite Federelement bevorzugt einen unterschiedlichen Wert einer Verformungskonstanten auf. Dadurch ist es möglich, dass die erste Batteriezelle und die zweite Batteriezelle mit einer unterschiedlichen Verpresskraft verpresst werden. Somit können die Alterungsgeschwindigkeiten der ersten Batteriezelle und der zweiten Batteriezelle beispielsweise derart angepasst werden, dass diese über die Betriebsdauer einen ähnlichen Alterungszustand aufweisen, insbesondere wenn die erste Batteriezelle und die zweite Batteriezelle eine unterschiedliche Temperatur aufweisen und somit temperaturbedingt unterschiedlich schnell altern. Damit ist es möglich, eine auf einer unterschiedlichen Temperatur der Batteriezellen beruhende unterschiedliche Alterungsgeschwindigkeit durch eine unterschiedliche Verpresskraft auszugleichen. Dabei werden Batteriezellen mit einer höheren Temperatur mit einer geringeren Verpresskraft verpresst als Batteriezellen mit einer im Vergleich dazu geringeren Temperatur. Weiterhin ist es dadurch auch möglich, schon bestehende ungleichmäßige Verpressungszustände, welche beispielsweise fertigungsbedingt sind oder durch Endplatten bzw. Trennplatten des Batteriemoduls mit einer unterschiedlichen Elastitzität entstehen, auszugleichen.

Es ist zweckmäßig, dass das Batteriemodul zwei Endplatten aufweist und die Mehrzahl an Batteriezellen sowie insbesondere auch die Mehrzahl an Trennwänden zwischen den zwei Endplatten angeordnet ist. Dabei sind die zwei Endplatten durch zumindest ein Verspannelement in der Art miteinander verbunden, dass die zwei Endplatten eine Kraft zum Verpressen der Mehrzahl an Batteriezellen übertragen. Dadurch kann die Kraft zum Verpressen der einzelnen Batteriezellen des Batteriemoduls auf einfache Weise über die zwei Endplatten aufgebracht werden, wobei die Verformungskonstanten der jeweils zwischen zwei zu einer Batteriezelle benachbarten Trennwänden angeordneten Federelemente die Kraft bestimmen, mit der die Batteriezelle, welche zwischen denselben zwei Trennwänden angeordnet ist wie das Federelement, verpresst wird.

Gemäß einem Aspekt der Erfindung bilden die Batteriezellen jeweils ein Batteriezellengehäuse aus. Dabei kann das Batteriezellengehäuse zumindest einer der Batteriezellen zumindest eine Trennwand umfassen. Insbesondere ist es möglich, dass jede Batteriezelle der Mehrzahl an Batteriezellen eine Trennwand umfasst. Dadurch ist ein einfacher Aufbau des Batteriemoduls möglich.

Es ist zweckmäßig, wenn zwei benachbarte Trennwände jeweils mit ihren größten Seitenflächen in einer Längsrichtung des Batteriemoduls benachbart zueinander und durch einen Abstand voneinander beabstandet angeordnet sind. Dabei sind die Batteriezellen, welche jeweils zwischen zwei Trennwänden angeordnet sind, bevorzugt prismatisch ausgebildet und des Weiteren nebeneinander in der Längsrichtung des Batteriemoduls mit ihren größten Seitenflächen benachbart zueinander angeordnet. Dadurch ist es möglich, dass eine zuverlässige Verpressung der Batteriezellen möglich ist, da die Trennwände mit ihren größten Seitenflächen die größten Seitenflächen der Batteriezellen kontaktieren und damit eine sichere Übertragung der Verpresskräfte zu einer Verpressung gewährleisten.

Von Vorteil ist es, wenn die Verformungskonstante eine Federkonstante, ein Elastizitätsmodul oder ein Kompressionsmodul ist. Somit kann die Verformungskonstante als materialspezifische Größe gewählt oder durch Ausbildung des Federelements bestimmt werden. Das Federelement kann dabei rein elastisch ausgebildet sein oder auch einen plastisch verformbaren Anteil umfassen.

Erfindungsgemäß weist das Batteriemodul eine Mehrzahl an Federelementen auf, welche jeweils zwischen zwei Trennwänden angeordnet sind. Dabei können zwischen zwei Trennwänden auch mehrere Federelemente angeordnet sein, wie beispielsweise zwei Federelemente. Das Batteriemodul weist weiterhin in einer Längsrichtung einen ersten Bereich und einen zweiten Bereich auf. Erfindungsgemäß ist das Batteriemodul derart ausgebildet, dass die Werte der Verformungskonstanten der Federelemente in dem ersten Bereich in der Längsrichtung des Batteriemoduls zunehmen und/oder in dem zweiten Bereich in der Längsrichtung des Batteriemoduls abnehmen. Dadurch nimmt in dem ersten Bereich in der Längsrichtung des Batteriemoduls die Kraft ab, mit der die einzelnen in der Längsrichtung des Batteriemoduls nebeneinander angeordneten Batteriezellen verpresst werden. Weiterhin nimmt in dem zweiten Bereich in der Längsrichtung des Batteriemoduls die Kraft zu, mit der die einzelnen in der Längsrichtung des Batteriemoduls nebeneinander angeordneten Batteriezellen verpresst werden. Da die Alterungsgeschwindigkeit der Batteriezellen von der Verpresskraft abhängig ist, kann somit eine inhomogene auf der Verpressung beruhende Verteilung der Alterungsgeschwindigkeit erzeugt werden. Weiterhin kann somit auch eine bestehende inhomogene Verpressung, welche insbesondere fertigungsbedingt ist oder auf einer unterschiedlichen Elastitzität von Trenn- und/oder Endplatten des Batteriemoduls beruht oder auch durch Fertigungstoleranzen der einzelnen Batteriezellen entstehen kann, ausgeglichen werden. Das Batteriemodul weist in der Längsrichtung ein erstes Ende und zweites Ende auf, wobei unter dem ersten Ende bzw. dem zweiten Ende jeweils eine sich am äußeren Rand des Batteriemoduls befindliche Batteriezelle beschrieben ist. Weiterhin weist das Batteriemodul in der Längsrichtung eine mittlere Position auf, welche sich insbesondere genau in der Mitte zwischen dem ersten Ende und dem zweiten Ende befindet. Bevorzugt umfasst der erste Bereich den Bereich zwischen dem ersten Ende und der mittleren Position des Batteriemodul und der zweite Bereich umfasst den Bereich zwischen der mittleren Postion und dem zweiten Ende des Batteriemoduls.
Zweckmäßigerweise ist der erste Bereich und der zweite Bereich in der Art angepasst, dass während des Betriebes die Temperatur der Batteriezellen in dem ersten Bereich in der Längsrichtung zunimmt und/oder in dem zweiten Bereich in der Längsrichtung abnimmt. Dadurch kann eine homogenere Verteilung der Alterungszustände der einzelnen Batteriezellen ermöglicht werden, weil die höhere Temperaturen aufweisenden Batteriezellen mit einer geringeren Kraft verpresst werden, als Batteriezellen mit einer vergleichsweise dazu niedrigeren Temperatur. Somit kann die insbesondere aufgrund unterschiedlicher Möglichkeiten der Wärmeabfuhr auftretende inhomogene Alterung, welche durch eine inhomogene Temperaturverteilung verursacht wird, mittels einer inhomogenen Verpressung, welche auf unterschiedlichen Verformungskonstanten der zwischen zwei Trennwänden angeordneten Federelementen beruht, ausgeglichen werden.

An dieser Stelle sei allerdings angemerkt, dass die Verpresskraft, mit der eine Batteriezelle verpresst wird, eine minimale Verpresskraft nicht unterschreiten darf, da sich ansonsten die Anode, der Separator und die Kathode voneinander lösen könnten, was allgemein unter Delaminierung bekannt ist. Eine zur Delaminierung führende Unterschreitung einer minimalen Verpresskraft könnte die Alterung unerwünscht verstärken.

Ferner betrifft die Erfindung eine Batterie mit einem eben beschriebenen Batteriemodul.

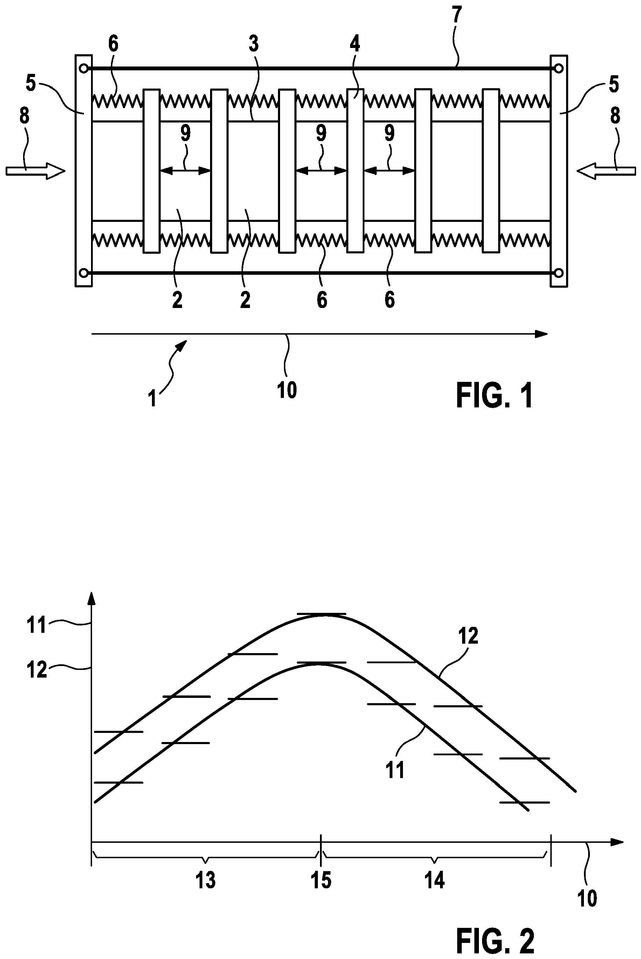

Erfindungsgemäß wird auch ein Verfahren zur Herstellung eines eben beschriebenen Batteriemoduls zur Verfügung gestellt. Dabei wird in einem ersten Schritt für jede Batteriezelle eine Temperatur bestimmt, welche diese während des Betriebes des Batteriemoduls aufweisen wird. Diese Bestimmung kann sowohl durch experimentelle Versuche als auch durch numerische Simulationen erfolgen. Insbesondere kann diese Bestimmung auch während des Betriebes des Batteriemoduls erfolgen. Insbesondere kann dabei als erste Nährung zugrunde gelegt werden, dass Batteriezellen in der Mitte des Batteriemoduls eine höhere Temperatur aufweisen werden, als Batteriezellen am Rand des Batteriemoduls, wobei Figur 2 exemplarisch einen Temperaturverlauf der Batteriezellen über der Längsrichtung des Batteriemoduls zeigt.
In einem zweiten Schritt werden die Federelemente in dem Batteriemodul nun derart angeordnet, dass ein Federelement einen größeren Wert einer Verformungskonstanten im Vergleich zu einem in der Längsrichtung des Batteriemoduls vorhergehenden Federelement aufweist, wenn die bestimmte Temperatur einer Batteriezelle, welche zwischen denselben zwei Trennwänden angeordnet ist wie das Federelement, größer ist als die Temperatur einer Batteriezelle, welche zwischen denselben zwei Trennwänden angeordnet ist wie das vorhergehende Federelement.
Weiterhin werden in dem zweiten Schritt die Federelemente in dem Batteriemodul derart angeordnet, dass ein Federelement einen kleineren Wert einer Verformungskonstanten im Vergleich zu einem in der Längsrichtung des Batteriemoduls vorhergehenden Federelement aufweist, wenn die bestimmte Temperatur einer Batteriezelle, welche zwischen denselben zwei Trennwänden angeordnet ist wie das Federelement, kleiner ist als die Temperatur einer Batteriezelle, welche zwischen denselben zwei Trennwänden kann das vorhergehende Federelement.
Dadurch kann die inhomogene Alterung der Batteriezellen, welche auf der inhomogenen Temperaturverteilung beruht, mittels einer inhomogenen Verteilung der Verpresskraft zumindest teilweise ausgeglichen werden.

### Kurze Beschreibung der Zeichnungen

Ausführungsbeispiele der Erfindung sind in den Zeichnungen dargestellt und in der nachfolgenden Beschreibung näher erläutert.

Es zeigen
Figur 1 schematisch eine Ausführungsform eines erfindungsgemäßen Batteriemoduls in einer Seitenansicht und
Figur 2 exemplarisch einen Temperaturverlauf der Batteriezellen während des Betriebes und einen Verlauf der Werte der Verformungskonstanten der Federelemente über der Längsrichtung des Batteriemoduls.

Die Figur 1 zeigt schematisch eine Ausführungsform eines erfindungsgemäßen Batteriemoduls 1 in einer Seitenansicht. Dabei weist das in Figur 1 gezeigte Batteriemodul 1 bevorzugt eine Mehrzahl an Federelementen 6 auf.

Das Batteriemodul 1 weist eine Mehrzahl an Batteriezellen 2 auf, wobei das in Figur 1 gezeigte Batteriemodul 1 beispielsweise sieben Batteriezellen 2 aufweist. Bevorzugt weist eine Batteriezelle 2 ein Batteriezellengehäuse 3 auf, in welchem die hier nicht gezeigten elektrochemischen Komponenten der Batteriezelle 2 aufgenommen sind.

Des Weiteren ist aus der Figur 1 zu erkennen, dass das Batteriemodul 1 weiterhin eine Mehrzahl an Trennwänden 4 aufweist, wobei das in Figur 1 gezeigte Batteriemodul 1 beispielsweise sechs Trennwände 4 aufweist. Insbesondere aus Figur 1 ist zu erkennen, dass die Anzahl der Batteriezellen 2 um eins höher ist als die Anzahl der Trennwände 4.

Weiterhin weist das Batteriemodul 1 zwei Endplatten 5 auf, wobei die Batteriezellen 2 und die Trennwände 4 zwischen den zwei Endplatten 5 angeordnet sind. Insbesondere sind die zwischen den zwei Endplatten 5 angeordneten Batteriezellen 2 und die Trennwände 4 alternierend angeordnet, wobei, wie aus der Figur 1 zu erkennen ist, in einer Längsrichtung des Batteriemoduls 1, welche mit dem Bezugszeichen 10 bezeichnet ist, eine Trennwand 4 auf eine Batteriezelle 2 folgt.

Wie aus der Figur 1 weiterhin zu erkennen ist, ist eine Batteriezelle 2 zwischen zwei Trennwänden 4 oder zwischen einer Trennwand 4 und einer der zwei Endplatten 5 angeordnet. Zwei Trennwände 4, zwischen welchen eine Batteriezelle 2 angeordnet ist, und eine der zwei Endplatten 5 und eine Trennwand 4, zwischen welchen eine Batteriezelle 2 angeordnet ist, sind jeweils durch einen Abstand 9 voneinander beabstandet. Die zwei Trennwände 4 bzw. die eine der zwei Endplatten 5 und die Trennwand 4 übertragen die zu einer Verpressung der Batteriezelle 2 erforderlichen Kräfte. Je kleiner der Abstand 9 also ist, desto größer ist somit auch die Verpresskraft.

Zwischen zwei Trennwänden 4 und/oder zwischen einer Trennwand 4 und einer Endplatte 5 ist weiterhin ein Federelement 6 angeordnet. Insbesondere können zwischen zwei Trennwänden 4 und/oder zwischen einer Trennwand 4 und einer Endplatte 5 jeweils mehrere, insbesondere wie aus Figur 1 zu erkennen ist, zwei Federelemente 6 angeordnet sein. Ein Federelement 6 weist dabei eine Verformungskonstante auf, welche einen Zusammenhang zwischen einer Verformung und der aufgebrachten Kraft beschreibt. Das Federelement 6 ist dabei kontaktierend und/oder verbunden mit den zwei Trennwänden 4 bzw. der Trennwand 4 und der einen der zwei Endplatten 5 angeordnet, zwischen welchen das Federelement 6 angeordnet ist. Bei dem in Figur 1 schematisch gezeigten Ausführungsbeispiel eines erfindungsgemäßen Batteriemoduls 1 ist unter der Verformung des Federelements 6 eine Längenänderung in der Längsrichtung 10 des Batteriemoduls 1 zu verstehen.

Eine Rückstellkraft des Federelements 6 versucht der Verformung des Federelements 6, insbesondere der Längenänderung in der Längsrichtung 10 des Batteriemoduls 1, entgegen zu wirken. Weiterhin bewirken die auf den Alterungsvorgängen der Batteriezellen 2 beruhenden Ausdehnungsvorgänge Kräfte, welche den Abstand 9 vergrößern. Die Rückstellkraft des Federelements 6 und die auf den Ausdehnungsvorgängen beruhenden Kräfte sind also parallel geschaltet. Mit anderen Worten ausgedrückt bedeutet dies, dass ein Federelement 6 parallel zu einer Batteriezelle 2 geschaltet ist. Zu einer Verpressung einer Batteriezelle 2 ist es daher erforderlich, sowohl der Rückstellkraft des Federelements 6 als auch den auf Ausdehnungsvorgängen der Batteriezellen 2 beruhenden Kräfte entgegenzuwirken. Durch eine Erhöhung der Verformungskonstanten des Federelements 6 kann die gesamte der Verpressung entgegen wirkende Kraft erhöht werden, wodurch auch der Abstand 9 vergrößert wird und damit die Verpresskraft einer Batteriezelle 2 abnimmt.

Die zwei Endplatten 5 sind durch ein Verspannelement 7 miteinander verbunden. Dadurch wird aufgrund der Verbindung der zwei Endplatten 5 bei einer Ausdehnung der einzelnen Batteriezellen 2 während des Betriebes des Batteriemoduls 1 von jeder der zwei Endplatten 5 eine der Ausdehnung entgegen wirkende Kraft, welche mit dem Bezugszeichen 8 bezeichnet ist, aufgebracht. Des Weiteren ist es gemäß einem Gedanken der Erfindung auch möglich, dass die beiden Endplatten 5 nicht miteinander verbunden sind und die der Ausdehnung entgegen wirkenden Kräfte 8 auf andere Art aufgebracht werden. Die zur Verpressung der einzelnen Batteriezellen 2 erforderliche Kraft 8 wird somit von den zwei Endplatten 5 aufgebracht. Da die zwischen zwei Trennwänden 4 angeordneten Federelemente 6, welche parallel zu unterschiedlichen Batteriezellen 2 geschaltet sind, jeweils bevorzugt eine unterschiedliche Verformungskonstante aufweisen, sind letztlich auch die Abstände 9 zwischen zwei Trennwänden 4 unterschiedlich voneinander. Da der Abstand 9 die Verpresskraft bestimmt, mit der die einzelnen Batteriezellen 2 verpresst werden, werden die einzelnen Batteriezellen 2 aufgrund einer unterschiedlichen Verformungskonstanten der Federelemente 6 auch mit einer unterschiedlichen Verpresskraft verpresst. Ein Federelement 6 mit einem größeren Wert einer Verformungskonstanten wird weniger verformt als ein Federelement 6 mit einem kleineren Wert einer Verformungskonstanten, wodurch die zwei Trennwände 4, zwischen denen die Federelemente 6 jeweils angeordnet sind, einen unterschiedlichen Abstand 9 aufweisen.

Da gemäß dem in Figur 1 gezeigten Ausführungsbeispiel die zwei Endplatten 5 durch ein Verspannelement 7 miteinander verspannt sind, ist der Abstand zwischen den zwei Endplatten 5 bevorzugt konstant. Selbstverständlich ist es auch möglich, die Endplatten 5 der Art miteinander zu verspannen, dass der Abstand zumindest teilweise variabel ist. Aufgrund des insbesondere konstanten Abstandes zwischen den zwei Endplatten 5 sind bei dem in Figur 1 gezeigten Ausführungsbeispiel die einzelnen Abstände 9 nicht unabhängig voneinander. Grundsätzlich gilt, dass zwei Trennwände 4, zwischen welchen ein Federelement 6 mit einem größeren Wert einer Verformungskonstanten angeordnet ist, einen größeren Abstand 9 aufweisen, als zwei Trennwände 4, zwischen welchen ein Federelement 6 mit einem geringeren Wert einer Verformungskonstanten angeordnet ist. Näherungsweise kann angenommen werden, dass das Verhältnis zweier Verformungskonstanten zueinander dem Verhältnis der Abstände 9 entspricht, welche durch die jeweiligen Federelemente 6 bestimmt werden.

Die Figur 2 zeigt exemplarisch einen Temperaturverlauf der Batteriezellen 2 während des Betriebes und einen Verlauf der Werte der Verformungskonstanten der Federelemente 6 über der Längsrichtung 10 des Batteriemoduls 1.

Dazu ist in der Figur 2 über der mit dem Bezugszeichen 10 bezeichneten Längsrichtung des Batteriemoduls 1 sowohl der Verlauf der Temperatur 11 und der Verlauf der Werte der Verformungskonstanten 12 aufgetragen.

Dabei ist zu erkennen, dass die Temperatur 11 der einzelnen Batteriezellen 2 während des Betriebes des Batteriemoduls 1 in einem ersten Bereich 13 in der Längsrichtung 10 zunimmt und in einem zweiten Bereich 14 in der Längsrichtung 10 abnimmt.

Weiterhin ist aus der Figur 2 zu erkennen, dass die Werte der Verformungskonstanten 12 derart angepasst sind, dass diese in dem ersten Bereich 13 in der Längsrichtung 10 zunehmen und in dem zweiten Bereich 14 in der Längsrichtung 10 abnehmen.

Insbesondere weisen der Verlauf der Temperatur 11 und/oder der Verlauf der Werte der Verformungskonstanten 12 näherungsweise einen parabelförmigen Charakter auf, wobei der Scheitel der Parabel in einer mittleren Position 15 in der Längsrichtung 10 des Batteriemoduls 1 liegt.

Erfindungsgemäß ist es vorgesehen, dass der Verlauf der Temperatur 11 vor dem Betrieb des Batteriemoduls 1 bestimmt wird und der Verlauf der Werte der Verformungskonstanten 12 in der Art an den bestimmten Verlauf der Temperatur 11 angepasst wird, dass eine auf der Temperatur 11 beruhende inhomogene Alterungsgeschwindigkeit durch eine inhomogene Verteilung der Verpresskraft, welche auf einer inhomogenen Verteilung der Werte der Verformungskonstanten 12 beruht, ausgleicht. Dies kann durchaus auch ein mehrere Hoch- und Tiefpunkte umfassender Verlauf mit mehreren ersten Bereichen 13 und mehreren zweiten Bereichen 14 sein.

## Patentansprüche

1. Batteriemodul mit einer Mehrzahl an Batteriezellen, insbesondere Lithium-Ionen-Batteriezellen,
aufweisend eine Mehrzahl an Trennwänden (4), wobei
zwischen zwei Trennwänden (4) eine Batteriezelle (2) angeordnet ist, und
zwischen den zwei zu der Batteriezelle (2) benachbarten Trennwänden (4) weiterhin ein Federelement (6) angeordnet ist, insbesondere ein Zug- und/oder Druckfederelement, welches in der Art kontaktierend und/oder verbunden mit den zwei Trennwänden (4) angeordnet ist, dass
ein Wert einer Verformungskonstanten (12) des Federelements (6) eine von den zwei Trennwänden (4) auf die Batteriezelle (2) übertragene Kraft bestimmt, wobei das Batteriemodul (1) eine Mehrzahl an Federelementen (6) aufweist, und
weiterhin in einer Längsrichtung (10) einen ersten Bereich (13) und einen zweiten Bereich (14) aufweist,
**dadurch gekennzeichnet, dass**
die Werte der Verformungskonstanten (12) der Federelemente (6) in dem ersten Bereich (13) in der Längsrichtung (10) des Batteriemoduls (1) zunehmen und/oder in dem zweiten Bereich (14) in der Längsrichtung (10) des Batteriemoduls (1) abnehmen.

2. Batteriemodul nach Anspruch 1, wobei
zwischen zwei zu einer ersten Batteriezelle (2) benachbarten Trennwänden (4) ein erstes Federelement (6) angeordnet ist und
zwischen zwei zu einer zweiten Batteriezelle (2) benachbarten Trennwänden (4) ein zweites Federelement (6) angeordnet ist, **dadurch gekennzeichnet, dass** das erste Federelement (6) und das zweite Federelement (6) einen unterschiedlichen Wert einer Verformungskonstanten (12) aufweisen.

3. Batteriemodul nach Anspruch 1 oder 2, wobei
das Batteriemodul (1) zwei Endplatten (5) aufweist und
die Mehrzahl an Batteriezellen (2) zwischen den zwei Endplatten (5) angeordnet ist,
**dadurch gekennzeichnet, dass**
die zwei Endplatten (5) durch zumindest ein Verspannelement (7) in der Art miteinander verbunden sind, dass die zwei Endplatten (5) eine Kraft (8) zum Verpressen der Mehrzahl an Batteriezellen (2) übertragen.

4. Batteriemodul nach einem der vorhergehenden Ansprüche, wobei
die Batteriezellen (2) jeweils ein Batteriezellengehäuse (3) ausbilden, **dadurch gekennzeichnet, dass** das Batteriezellengehäuse (3) zumindest einer Batteriezelle (2) zumindest eine Trennwand (4) umfasst.

5. Batteriemodul nach einem der vorhergehenden Ansprüche, wobei
zwei benachbarte Trennwände (4) jeweils mit ihren größten Seitenflächen in einer Längsrichtung (10) des Batteriemoduls (1) benachbart zueinander und durch einen Abstand (9) voneinander beabstandet angeordnet sind, wobei
die Batteriezellen (2) jeweils prismatisch ausgebildet sind und nebeneinander in der Längsrichtung (10) des Batteriemoduls (1) mit ihren größten Seitenflächen benachbart zueinander angeordnet sind.

6. Batteriemodul nach einem der vorhergehenden Ansprüche 2 bis 5, **dadurch gekennzeichnet, dass** die Verformungskonstante (12) eine Federkonstante, ein Elastizitätsmodul, ein Kompressionsmodul oder eine Viskosität ist.

7. Batteriemodul nach dem vorhergehenden Anspruch 1, **dadurch gekennzeichnet, dass** der erste Bereich (13) und der zweite Bereich (14) in der Art angepasst sind,
dass während des Betriebes die Temperatur (11) der Batteriezellen (2) in dem ersten Bereich (13) in der Längsrichtung (10) zunimmt und/oder in dem zweiten Bereich (14) in der Längsrichtung (10) abnimmt.

8. Batterie mit einem Batteriemodul nach einem der Ansprüche 1 bis 7.

9. Verfahren zur Herstellung eines Batteriemoduls nach einem der Ansprüche 1 bis 7, wobei in einem ersten Schritt eine Temperatur (11) einer Batteriezelle (2) für den Betrieb des Batteriemoduls (1) bestimmt wird und
in einem zweiten Schritt Federelemente (6) in dem Batteriemodul (1) derart angeordnet werden, dass ein Federelement (6) einen größeren Wert einer Verformungskonstanten (12) im Vergleich zu einem in einer Längsrichtung (10) des Batteriemoduls vorhergehenden Federelement (6) aufweist, wenn die bestimmte Temperatur (11) einer Batteriezelle (2), welche zwischen denselben zwei Trennwänden (4) angeordnet ist wie das Federelement (6), größer ist als die Temperatur (11) einer Batteriezelle (2), welche zwischen denselben zwei Trennwänden (4) angeordnet ist wie das vorhergehende Federelement (6) und/oder
dass ein Federelement (6) einen kleineren Wert einer Verformungskonstanten (12) im Vergleich zu einem in einer Längsrichtung (10) des Batteriemoduls (1) vorhergehenden Federelement (6) aufweist, wenn die bestimmte Temperatur einer Batteriezelle, welche zwischen denselben zwei Trennwänden (4) angeordnet ist wie das Federelement (6), kleiner ist als die Temperatur (11) einer Batteriezelle (2), welche zwischen denselben zwei Trennwänden (4) angeordnet ist wie das vorhergehende Federelement (6).

## Claims

1. Battery module having a plurality of battery cells, in particular lithium-ion battery cells,
exhibiting a plurality of partitions (4), wherein
a battery cell (2) is arranged between two partitions (4), and
between the two partitions (4) adjacent to the battery cell (2) a spring element (6) is furthermore arranged, in particular a tension-spring element and/or compression-spring element, which is arranged contacting and/or connected to the two partitions (4) in such a way that
a value of a deformation constant (12) of the spring element (6) determines a force transmitted from the two partitions (4) to the battery cell (2), wherein the battery module (1) exhibits a plurality of spring elements (6) and further exhibits a first region (13) and a second region (14) in a longitudinal direction (10),
**characterized in that**
the values of the deformation constant (12) of the spring elements (6) increase in the first region (13) in the longitudinal direction (10) of the battery module (1) and/or decrease in the second region (14) in the longitudinal direction (10) of the battery module (1).

2. Battery module according to Claim 1, wherein
a first spring element (6) is arranged between two partitions (4) adjacent to a first battery cell (2) and a second spring element (6) is arranged between two partitions (4) adjacent to a second battery cell (2),
**characterized in that**
the first spring element (6) and the second spring element (6) have a different value of a deformation constant (12).

3. Battery module according to Claim 1 or 2, wherein
the battery module (1) exhibits two end plates (5) and the plurality of battery cells (2) are arranged between the two end plates (5), **characterized in that**
the two end plates (5) are connected to one another by at least one bracing element (7) in such a way that the two end plates (5) transmit a force (8) for pressing the plurality of battery cells (2).

4. Battery module according to one of the preceding claims, wherein
the battery cells (2) respectively form a battery-cell housing (3), **characterized in that** the battery-cell housing (3) of at least one battery cell (2) includes at least one partition (4).

5. Battery module according to one of the preceding claims, wherein
two adjacent partitions (4) are arranged in each instance with their largest lateral surfaces adjacent to one another in a longitudinal direction (10) of the battery module (1) and are spaced from one another by a spacing (9), wherein
the battery cells (2) are each of prismatic design and are arranged side by side in the longitudinal direction (10) of the battery module (1) with their largest lateral surfaces adjacent to one another.

6. Battery module according to one of the preceding Claims 2 to 5, **characterized in that** the deformation constant (12) is a spring constant, a modulus of elasticity, a bulk modulus of compression, or a viscosity.

7. Battery module according to the preceding Claim 1, **characterized in that** the first region (13) and the second region (14) have been adapted in such a way that during operation the temperature (11) of the battery cells (2) increases in the first region (13) in the longitudinal direction (10) and/or decreases in the second region (14) in the longitudinal direction (10).

8. Battery with a battery module according to one of Claims 1 to 7.

9. Method for producing a battery module according to one of Claims 1 to 7,
wherein
in a first step, a temperature (11) of a battery cell (2) for the operation of the battery module (1) is determined and
in a second step, spring elements (6) are arranged in the battery module (1) in such a manner that one spring element (6) has a higher value of a deformation constant (12) in comparison with a preceding spring element (6) in a longitudinal direction (10) of the battery module if the determined temperature (11) of a battery cell (2) that is arranged between the same two partitions (4) as the spring element (6) is higher than the temperature (11) of a battery cell (2) that is arranged between the same two partitions (4) as the preceding spring element (6) and/or
that one spring element (6) has a lower value of a deformation constant (12) in comparison with a preceding spring element (6) in a longitudinal direction (10) of the battery module (1) if the determined temperature of a battery cell that is arranged between the same two partitions (4) as the spring element (6) is lower than the temperature (11) of a battery cell (2) that is arranged between the same two partitions (4) as the preceding spring element (6).

## Revendications

1. Module de batterie comprenant une pluralité de cellules de batterie, notamment des cellules de batterie aux ions de lithium,
possédant une pluralité de parois de séparation (4), une cellule de batterie (2) étant disposée entre deux parois de séparation (4), et
un élément ressort (6) étant en outre disposé entre les deux parois de séparation (4) voisines de la cellule de batterie (2), notamment un élément ressort de traction et/ou de compression, lequel est disposé avec établissement de contact et/ou relié avec les deux parois de séparation (4) de telle manière que
une valeur d'une constante de déformation (12) de l'élément ressort (6) détermine une force transmise par les deux parois de séparation (4) à la cellule de batterie (2),
le module de batterie (1) possédant une pluralité d'éléments ressorts (6) et
possédant en outre une première zone (13) et une deuxième zone (14) dans une direction longitudinale (10),
**caractérisé en ce que**
les valeurs de la constante de déformation (12) des éléments ressorts .(6) augmentant dans la première zone (13) dans la direction longitudinale (10) du module de batterie (1) et/ou diminuant dans la deuxième zone (14) dans la direction longitudinale (10) du module de batterie (1).

2. Module de batterie selon la revendication 1,
un premier élément ressort (6) étant disposé entre deux parois de séparation (4) voisines d'une première cellule de batterie (2) et
un deuxième élément ressort (6) étant disposé entre deux parois de séparation (4) voisines d'une deuxième cellule de batterie (2), **caractérisé en ce que**
le premier élément ressort (6) et le deuxième élément ressort (6) possèdent une valeur différente d'une constante de déformation (12).

3. Module de batterie selon la revendication 1 ou 2,
le module de batterie (1) possédant deux plaques d'extrémité (5) et
la pluralité de cellules de batterie (2) étant disposées entre les deux plaques d'extrémité (5),
**caractérisé en ce que**
les deux plaques d'extrémité (5) sont reliées l'une à l'autre par au moins un élément de haubanage (7) de telle manière que les deux plaques d'extrémité (5) transmettent une force (8) destinée à comprimer la pluralité de cellules de batterie (2).

4. Module de batterie selon l'une des revendications précédentes,
les cellules de batterie (2) formant respectivement un boîtier de cellule de batterie (3), **caractérisé en ce que** le boîtier de cellule de batterie (3) d'au moins une cellule de batterie (2) comporte au moins une paroi de séparation (4).

5. Module de batterie selon l'une des revendications précédentes,
deux parois de séparation (4) voisines étant respectivement disposées avec leurs surfaces latérales les plus grandes voisines l'une de l'autre dans une direction longitudinale (10) du module de batterie (1) et de manière espacée l'une de l'autre d'un écart (9),
les cellules de batterie (2) étant respectivement de configuration prismatique et disposées les unes à côté des autres dans la direction longitudinale (10) du module de batterie (1) avec leurs surfaces latérales les plus grandes voisines l'une de l'autre.

6. Module de batterie selon l'une des revendications 2 à 5, **caractérisé en ce que** la constante de déformation (12) est une constante de ressort, un module d'élasticité, un module de compression ou une viscosité.

7. Module de batterie selon la revendication 1 précédente, **caractérisé en ce que** la première zone (13) et la deuxième zone (14) sont adaptées de telle manière que pendant le fonctionnement, la température (11) des cellules de batterie (2) augmente dans la première zone (13) dans la direction longitudinale (10) et/ou diminue dans la deuxième zone (14) dans la direction longitudinale (10).

8. Batterie comprenant un module de batterie selon l'une des revendications 1 à 7.

9. Procédé de fabrication d'un module de batterie selon l'une des revendications 1 à 7,
une température (11) d'une cellule de batterie (2) pour le fonctionnement du module de batterie (1) étant déterminée dans une première étape,
dans une deuxième étape, des éléments ressorts (6) sont disposés dans le module de batterie (1) de telle manière qu'un élément ressort (6) possède une valeur plus élevée d'une constante de déformation (12) par rapport à un élément ressort (6) précédent dans une direction longitudinale (10) du module de batterie lorsque la température (11) déterminée d'une cellule de batterie (2), qui est disposée entre les deux mêmes parois de séparation (4) que l'élément ressort (6), est supérieure à la température (11) d'une cellule de batterie (2) qui est disposée entre les deux mêmes parois de séparation (4) que l'élément ressort (6) précédent et/ou qu'un élément ressort (6) possède une valeur plus petite d'une constante de déformation (12) par rapport à un élément ressort (6) précédent dans une direction longitudinale (10) du module de batterie (1) lorsque la température (11) déterminée d'une cellule de batterie, qui est disposée entre les deux mêmes parois de séparation (4) que l'élément ressort (6), est inférieure à la température (11) d'une cellule de batterie (2) qui est disposée entre les deux mêmes parois de séparation (4) que l'élément ressort (6) précédent.
